(19) Europäisches Patentamt / European Patent Office / Office européen des brevets

(11) **EP 4 270 131 A1**

(12) **EUROPEAN PATENT APPLICATION**

(43) Date of publication:
**01.11.2023 Bulletin 2023/44**

(21) Application number: **23171157.3**

(22) Date of filing: **02.05.2023**

(51) International Patent Classification (IPC):
**G05B 23/02** $^{(2006.01)}$

(52) Cooperative Patent Classification (CPC):
**G05B 23/0221; G05B 23/024; G05B 23/0281**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.04.2022 US 202217733396**

(71) Applicant: **RTX Corporation**
**Farmington, CT 06032 (US)**

(72) Inventors:
• **SETO, Danbing**
 **Avon, 06001 (US)**
• **ROCCO, Edward Thomas**
 **Rocky Hill, 06067 (US)**

(74) Representative: **Dehns**
 **St. Bride's House**
 **10 Salisbury Square**
 **London EC4Y 8JD (GB)**

(54) **METHOD AND APPARATUS FOR FAULT DETECTION IN A GAS TURBINE ENGINE AND AN ENGINE HEALTH MONITORING SYSTEM**

(57) A method for fault identification for a gas turbine engine (20) includes receiving sensor data from at least one health monitoring sensor (110) of a health monitoring system (100) for a gas turbine engine (20); utilizing a pre-filter to filter the sensor data and obtain filtered data based on a plurality of signatures of fault conditions of the health monitoring system (100) and the gas turbine engine (20); utilizing at least one transfer function to extract features from the filtered sensor data based on the plurality of signatures; utilizing a machine learning technique to analyze the extracted features, and determine whether any of the extracted features are indicative of a fault condition in the health monitoring system (100) or the gas turbine engine (20); and based on the analysis indicating the presence of a fault condition, providing a fault detection notification. A health monitoring system (100) for a gas turbine engine (20) is also disclosed.

FIG.1

**Description**

**BACKGROUND**

This application relates to fault detection, and more particularly fault detection in a gas turbine engine and in a health monitoring system for the gas turbine engine.

Gas turbine engines are known that utilize high-rate sensors to provide enhanced and sophisticated fault detection and isolation (FD&I) and engine health monitoring (EHM). As used herein, a high-rate sensor connotes one that utilizes a sampling rate of at least one kilohertz. With this type of sensor, a single point measurement generally does not tell much, but a collection of measurements collected consecutively may reveal a useful signature. Some example health monitoring systems include inlet debris monitoring (IDM) systems, oil debris monitoring (ODM) systems, blade health monitoring (BHM) systems, and vibration monitoring systems.

IDM systems monitor for debris entering an inlet of the engine, and typically include electrostatic sensors to detect charged debris entering the engine inlet. ODM systems monitor for debris in an oil lubricant in the engine and typically include inductive sensors to detect metallic particles present in an engine lubrication system (e.g., due to wear of a component in the gas turbine engine). BHM systems monitor the well-being of fan, compressor, and/or turbine blades of the engine and may also utilize inductive sensors to check the blades passing by the sensors for anomaly. Vibration monitoring systems are configured to detect abnormal vibratory behavior of engine components, and usually have a broader coverage of health assessment for engine components using accelerometers placed in various engine locations. All of these monitoring systems share a common process, that is, the sensor signals are sampled at a very high rate (i.e., on the order of tens of kilohertz) so that a large amount of data is collected and processed for useful features. The extracted features (condition indicators - CI) are examined for health state (health indicators - HI).

While health monitoring systems are designed to assess the health of the engine and its components, the health of the health monitoring system itself can also be an issue if the monitoring system experiences a fault condition. While the so-called Built-in Tests are often used to perform a system health check for a monitoring system, some fault conditions are caused by system degradation or environmental interference other than a system flaw, and hence, they may not be detectable by BITs. This type of faults often produces undesirable or erroneous sensor signals and affects the system performance. In addition, the monitoring systems may be vulnerable to false positive detections if the sensing system itself has problem that may not be detectable with an existing rule-based system, faults occur in those monitoring systems, such as a connection issue between a sensor and related signal processing circuitry.

**SUMMARY**

A method for fault identification for a gas turbine engine according to an example embodiment of the present disclosure includes receiving sensor data from at least one health monitoring sensor of a health monitoring system for a gas turbine engine, each of the at least one sensors having a sampling rate of at least one kilohertz; utilizing a pre-filter to filter the sensor data and obtain filtered data based on a plurality of signatures of fault conditions of the health monitoring system and the gas turbine engine; utilizing at least one transfer function to extract features from the filtered sensor data based on the plurality of signatures; utilizing a machine learning technique to analyze the extracted features, and determine whether any of the extracted features are indicative of a fault condition in the health monitoring system or the gas turbine engine; and based on the analysis indicating the presence of a fault condition, providing a fault detection notification.

In a further embodiment of the foregoing embodiment, the pre-filter is designed based on the physics properties of the health monitoring system, the gas turbine engine, or both. Pre-filter criteria indicates data that may be omitted that is one of greater than or less than a signal threshold, and utilizing the pre-filter includes omitting sensor data that is said one of greater than or less than the signal threshold.

In a further embodiment of any of the foregoing embodiments, utilizing the pre-filter includes omitting sensor data that corresponds to healthy engine operation.

In a further embodiment of any of the foregoing embodiments, the at least one transfer function includes first-tier transfer functions and second-tier transfer functions. The method includes utilizing one or more of the first-tier transfer functions to convert the filtered sensor data to a set of first-tier features, and utilizing one or more of the second-tier transfer functions to convert the set of first-tier features to a set of second-tier features for fault identification.

In a further embodiment of any of the foregoing embodiments, the first-tier features are measured over a first duration of time, and the second-tier features are measured over a second duration of time that is greater than the first duration of time.

In a further embodiment of any of the foregoing embodiments, the first-tier transfer functions utilize a time domain analysis, a frequency domain analysis, wavelet filtering, notch filtering, or passband filtering to provide the set of first-tier features, and each second-tier feature represents a change in one of the first-tier features over time.

In a further embodiment of any of the foregoing embodiments, the method includes, based on the analysis indicating the presence of a fault condition, validating the fault condition by determining whether the filtered sensor data corresponding to the fault condition is consistent with a corresponding one of the plurality of signatures corresponding to the fault condition. Providing a fault detection notification is only performed if the validating indicates that the filtered sensor data corresponding to the fault condition is consistent with the corresponding one of the plurality of signatures corresponding to the fault condition.

In a further embodiment of any of the foregoing embodiments, the one or more signatures of fault conditions include one or more signatures for a degraded health monitoring sensor.

In a further embodiment of any of the foregoing embodiments, the one or more signatures of fault conditions include one or more signatures for a degraded communication link.

In a further embodiment of any of the foregoing embodiments, the one or more signatures of fault conditions include one or more signatures for external interference to signals from the at least one sensor.

In a further embodiment of any of the foregoing embodiments, the health monitoring system is one of an inlet debris monitoring system; an oil debris monitoring system; a blade health monitoring system for fan, compressor, or turbine blades; or a vibration monitoring system configured to monitor vibration of the gas turbine engine, in which case the at least one health monitoring sensor includes an accelerometer.

A health monitoring system for a gas turbine engine according to an example embodiment of the present disclosure includes at least one health monitoring sensor configured to provide sensor data indicative of a health of a gas turbine engine. Each of the at least one sensors has a sampling rate of at least one kilohertz. Each of the at least one sensors also has processing circuitry configured to receive the sensor data from the at least one health monitoring sensor; utilize a pre-filter to filter the sensor data and obtain filtered data that omits portions of the sensor data based on a plurality of signatures of fault conditions of the health monitoring system and the gas turbine engine; utilize at least one transfer function to extract features from the filtered sensor data based on the plurality of signatures; utilize a machine learning technique to analyze the extracted features, and determine whether any of the extracted features are indicative of a fault condition in the health monitoring system or the gas turbine engine; and based on the analysis indicating the presence of a fault condition, provide a fault detection identification.

In a further embodiment of the foregoing embodiment, the pre-filter is designed based on the physics properties of the health monitoring system, the gas turbine engine, or both. Pre-filter criteria indicates data that may be omitted that is one of greater than or less than a signal threshold. To utilize the pre-filter, the processing circuitry is configured to omit sensor data that is said one of greater than or less than the signal threshold.

In a further embodiment of any of the foregoing embodiments, to utilize the pre-filter, the processing circuitry is configured to omit sensor data that corresponds to healthy engine operation.

In a further embodiment of any of the foregoing embodiments, the at least one transfer function includes first-tier transfer functions and a second-tier transfer functions. The processing circuitry is configured to utilize one or more of the first-tier transfer functions to convert the filtered sensor data to a set of first-tier features and utilize one or more of the second-tier transfer function to convert the set of first-tier features to a set of second-tier features for fault identification.

In a further embodiment of any of the foregoing embodiments, the first-tier features are measured over a first duration of time, and the second-tier features are measured over a second duration of time that is greater than the first duration of time.

In a further embodiment of any of the foregoing embodiments, the first-tier transfer functions utilize a time domain analysis, a frequency domain analysis, wavelet filtering, notch filtering, or passband filtering to provide the set of first-tier features. Each second-tier feature represents a change in one of the first-tier features over time.

In a further embodiment of any of the foregoing embodiments, the processing circuitry is configured to, based on the analysis indicating the presence of a fault condition, validate the fault condition by determining whether the filtered sensor data corresponding to the fault condition is consistent with a corresponding one of the plurality of signatures corresponding to the fault condition. The processing circuitry is also configured to only provide the fault detection notification based on the validation indicating that the filtered sensor data corresponding to the fault condition is consistent with the corresponding one of the plurality of signatures corresponding to the fault condition.

In a further embodiment of any of the foregoing embodiments, the one or more signatures of known fault conditions include at least one of signatures for a degraded health monitoring sensors, signatures for a degraded communication link to one of the health monitoring sensors, or signatures for external interference to the signals from one of the health monitoring sensors.

In a further embodiment of any of the foregoing embodiments, the health monitoring system includes an inlet debris monitoring system configured to monitor for debris entering an inlet of the gas turbine engine; an oil debris monitoring system configured to monitor for debris in a lubrication system of the gas turbine engine; a blade health monitoring system for fan, compressor, or turbine blades; or a vibration monitoring system configured to monitor vibration of the gas turbine engine, in which case the at least one health monitoring sensor includes at least one accelerometer.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

**BRIEF DESCRIPTION OF THE DRAWINGS**

Figure 1 schematically illustrates an example gas turbine engine that includes multiple health monitoring systems.

Figure 2 schematically illustrates an example ODM system of Figure 1 in greater detail.

Figure 3 schematically illustrates an example IDM system for the gas turbine engine of Figure 1.

Figure 4 schematically illustrates an example health monitoring system for a gas turbine engine.

Figure 5 is a flowchart that depicts an example method for fault identification in a gas turbine engine or its health monitoring system.

Figure 6A schematically illustrates an example health monitor sensor signal.

Figure 6B schematically illustrates an example implementation of the method of Figure 5 using the signal of Figure 6A.

Figures 7A-E are graphs illustrating signatures of various fault conditions for an example health monitoring system.

Figure 7F is a graph illustrating a signature of an example of health event fault condition of a gas turbine engine.

**DETAILED DESCRIPTION**

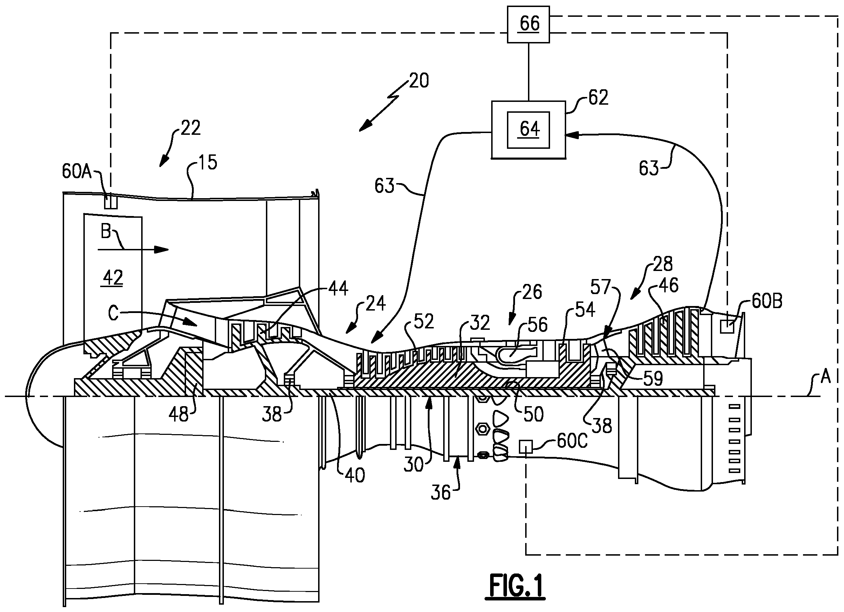

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

Although the example gas turbine engine 20 in Figure 1 is a geared turbofan engine, it is understood that this is a non-limiting example, and that the present disclosure is not limited to use with geared turbofan engines.

The example gas turbine engine 20 of Figure 1 includes an oil debris monitoring (ODM) system 62 that is configured to detect contaminants within a lubricant stream 63. It should be appreciated that throughout this application the terms "oil" and "lubricant" are used interchangeable.

The ODM system 62 includes at least one health monitoring sensor 64, which in is an in-line, full flow oil debris sensor 64 inserted in a lubrication system. The oil debris sensor 64 provides measurements to a computing device 66 (e.g., a FADEC). The ODM system 62 detects debris and provides information indicative of mechanical fault/failure in the engine. Depending on the contaminants detected in the lubricant stream, the computing device 66 may prompt a further inspection or other maintenance activity.

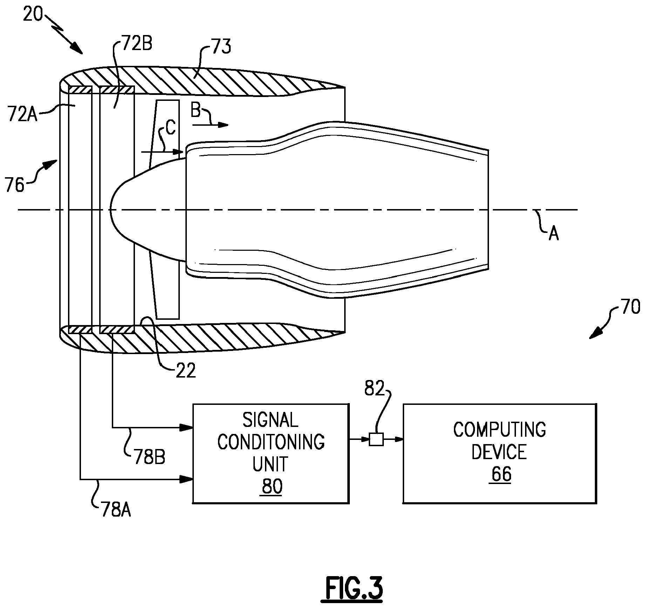

The gas turbine engine 20 also includes a plurality of health monitoring sensors 60A-C that are in communication with the computing device 66 for a different health monitoring system (e.g., an IDM, BHM, and/or vibration health monitoring system). In one example, the health monitoring sensor 60A is part of a BHM that monitors the health of fan blades. The health monitoring sensor 60A, or additional sensors, may be used to monitor compressor and/or turbine blades, for example. As an example, the health monitoring sensor 60A may monitor if blades are bent, missing, or fluttering. The health monitoring sensor 60A is configured to provide sensor data to the computing device 66. In one example, the health monitoring sensors 60A, 60B, and 60C are vibration sensors configured to detect abnormal vibratory behavior of engine components of the gas turbine engine 20. As will be discussed in connection with Figure 3 below, an IDM could also be used. In one example, the health monitoring sensor 60A is part of an IDM. Although an ODM, IDM, BHM, and vibration monitoring health monitoring systems are disclosed for the gas turbine engine, it is understood that any one or combination of them may be used, and that all four are not required.

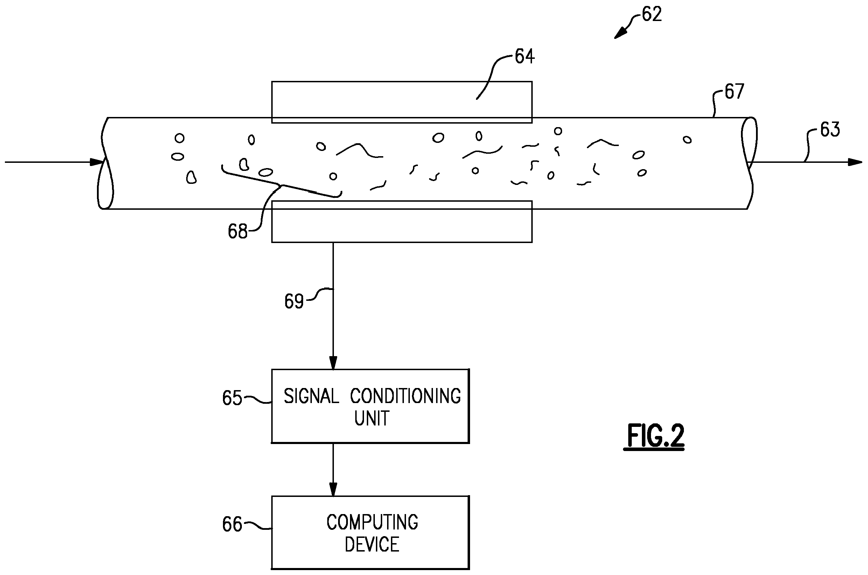

Figure 2 displays the ODM system 62 in greater detail. Referring to Figure 2 with continued reference to Figure 1, the example ODM system 62 includes the sensor assembly 64 that surrounds or is part of a conduit 67 through which the lubricant stream 63 flows. The lubricant stream 63 may include contaminants schematically illustrated at 68. The contaminants 68 come from various locations in the engine that are supplied oil and can indicate potential mechanical issues that require attention. The contaminants 68 can be identified by their material characteristics, shape, size or other features sensed by the sensor 64. The sensor 64 provides an output signal 69 that is sent to a signal conditioning unit 65, which conditions the signal for computing device 66 (e.g., by filtering and/or amplifying the signal 69). The computing device 66 prepares data from the signal 69 that is compiled for latter analysis to determine operational health of the gas turbine engine 20.

In this example, the sensor 64 generates an electrical signal that varies due to contaminants 68 within the lubricant stream 63. The signal 69 varies based on the electrical characteristics of the lubricant stream 63. The electrical characteristics of the lubricant stream 63 vary due to different types of contaminants 68. The contaminants 68 may be ferrous or non-ferrous and may vary in size, shape and quantity for a given time.

Figure 3 schematically illustrates an IDM system 70 for the gas turbine engine 20 of Figure 1. The IDM system 70 includes a first electrostatic sensor 72A and a second electrostatic sensor 72B that is downstream of the first electrostatic sensor 72A. One or more of the sensors 72A-B may be used as the sensor 60A, for example. The electrostatic sensors 72A-B are spaced apart from each other along the engine central longitudinal axis A, and are configured to measure electrostatic charge within a nacelle 73 of the gas turbine engine 20. The electrostatic sensors 72A-B are annular, and are mounted to a nacelle 73 of the gas turbine engine 20. The nacelle 73 includes an inlet 76, and the electrostatic sensors 72A-B are configured to measure an electrostatic charge of debris that enters the nacelle 73 of the gas turbine engine 20 through the inlet 76.

A signal conditioning unit ("SCU") 80 is configured to receive sensor signals 78A-B from the electrostatic sensors 72A-B), and based on the signals 78A-B, provide a data set 82 of conditioned signal data to computing device 84. The SCU 80 performs one or more of the following: signal filtering, signal amplification, removal of bias due to A/D conversion, etc. The SCU 80 may include a low pass, high pass, or bandpass filter, for example.

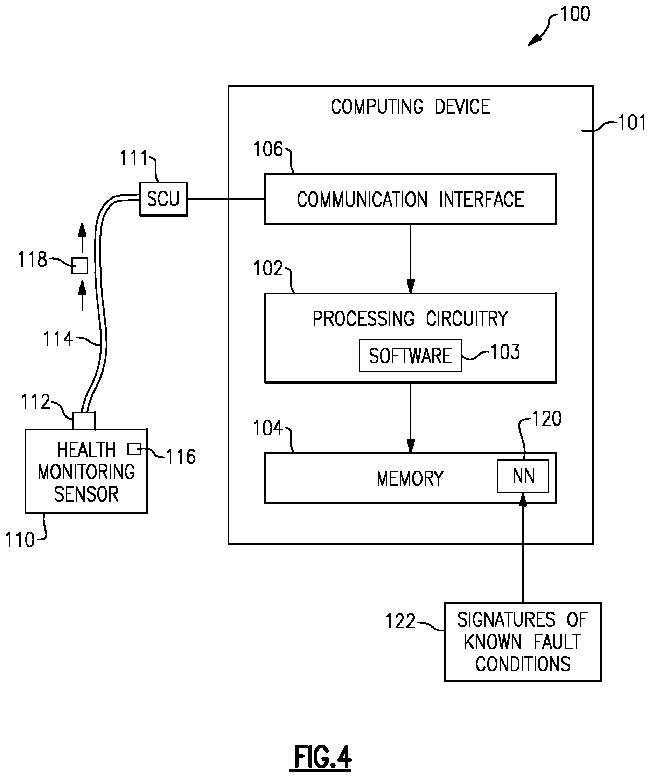

Figure 4 schematically illustrates an example health monitoring system 100 for a gas turbine engine. The system 100 includes a computing device 101, at least one health monitoring sensor 110, and SCU 111. The at least one health monitoring sensor uses a sampling rate of at least one kilohertz. The large amount of data collected at such a high rate will provide a better chance to track the wellbeing of the health monitoring system 100. Although the SCU 111 is shown as being separate from the computing device 101, it is understood that it may be partially or entirely part of the computing device 101 or be omitted in some examples.

The health monitoring system 100 may be used as the ODM system 62 or the IDM system 70, or as a BHM or vibration health monitoring system for example. In particular, the computing device 101 may be used as the computing device 66 of the ODM system 62 or the computing device 84 of the IDM system 70, the health monitoring sensor 110 may be used as the sensor 64 of the ODM system 62 or the sensor 72A or 72B of the IDM system 70, and the SCU 111 may be used as the SCU 65 of the ODM system 62 or SCU 80 of the IDM system 70. The computing device 101 may be an overall engine controller or an independent controller, for example, such as a FADEC.

As shown in Figure 4, the health monitoring sensor 110 provides a signal to SCU 111 and is connected to the SCU 111 through a connector 112 and wiring 114 (e.g., a wiring harness) and/or through a wireless connection using wireless communication device 116 (e.g., a wireless transceiver). The health monitoring sensor 110 is configured to provide data in the sensor data signal 118 (e.g., the signal 69 of Fig. 2 or the signal(s)) 78 of Fig. 3) to the SCU 111 through either the wiring 114 or wirelessly by utilizing the wireless communication device 116 (e.g., a wireless transceiver).

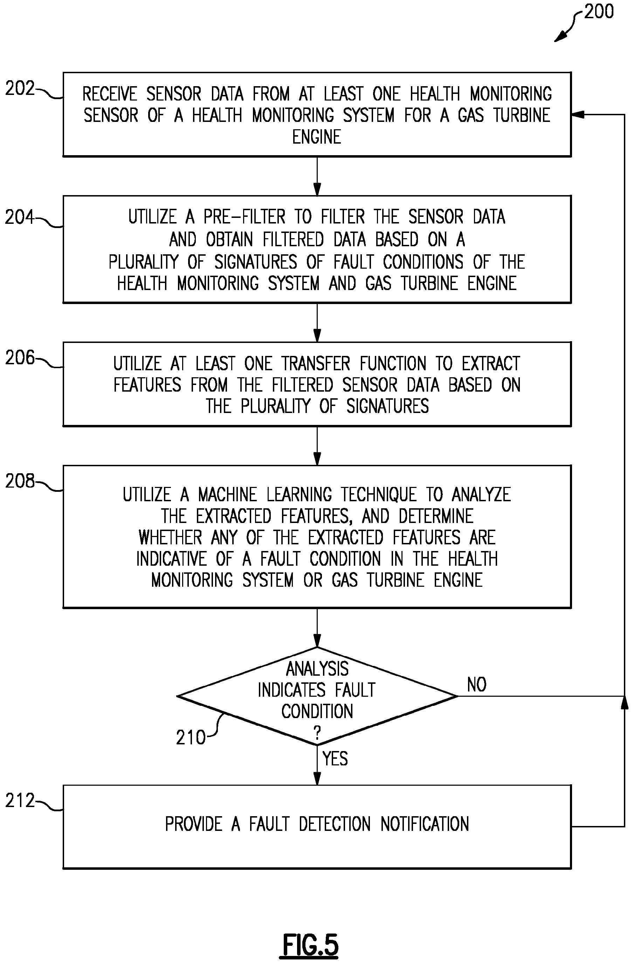

The computing device 101 includes processing circuitry 102 operatively connected to memory 104 and a communication interface 106. The processing circuitry 102 may include one or more microprocessors, microcontrollers, application specific integrated circuits (ASICs), or the like, for example. The processing circuitry 102 executes software 103 for fault identification, as discussed in greater detail below in connection with Figure 5.

The memory 104 may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 104 may incorporate electronic, magnetic, optical, and/or other types of storage media. The memory 104 may also have a distributed architecture, where various components are situated remotely from one another, but can be accessed by the processing circuitry 102. In the example of Figure 4, the memory 104 includes a neural network 120 that has been trained with one or more signatures 122 of known fault conditions for the ODM 62 or IDM 70. Some example fault conditions may include a faulty health monitoring sensor 110, a faulty connector 112, and/or a faulty wiring 114.

The communication interface 106 is configured to facilitate communication between computing device 101 and other devices, such as the health monitoring sensor 110 and/or SCU 111.

Gas turbine engines can be very hot and vibratory during operation. As a result, the sensor signal 118 is usually small in magnitude may be relatively buried in noise. Noise may occur due to additional environmental conditions as well, such as interference (e,g., electromagnetic interference), pressure (e.g., oil pump induced pressure ripple in an oil system), and/or relative motion (e.g. sensor vibration, signal coupling due to relative motion of wire), for example.

Additional noise may occur due to a fault in the health monitoring system 100, such as a degraded health monitoring sensor 110 and/or a degraded communication link to the health monitoring sensor 110 (e.g., degraded connector 112, degraded wiring 114, degraded wireless communication capability with wireless communication device 116, and/or elevated electromagnetic interference "EMI").

The occurrence of faults in the gas turbine engine 20 including the health monitoring system 100 are usually rare events. Therefore, the data for normal operation without faults and abnormal operation with faults are typically unbalanced. The relative rarity of faults, combined with the often noisy sensor signals, can make fault identification challenging.

To address these challenges, the present disclosure provides an enhanced fault detection and isolation (FD&I) system that utilizes machine learning of normal and abnormal operations and a physics-based understanding of sensor signals and engineering principles to detect fault conditions in the engine 20 and in the health monitoring system 100. The physics understanding and engineering principles are applied in extracting the features for classification and prediction using machine learning (e.g., Decision Trees, Discriminate Analysis, Regression Models, Neural Network Classifier, Naive Bayes Classifier, etc.).

Figure 5 is a flowchart of an example method 200 of detecting fault conditions in the engine 20 and the health monitoring system 100. The method 200 is at least partially performed by the computing device 101, in one example.

Referring now to Figure 5 with continued reference to Figure 4, sensor signal 118 is received from at least one health monitoring sensor 110 of health monitoring system 100 (e.g., ODM system 62, IDM system 70, BHM system, or vibration monitoring system) for the gas turbine engine 20 (step 202).

A pre-filter, which may be implemented in the software 103 run by the computing device (101), is utilized to filter the sensor data and obtain filtered data based on a plurality of signatures of fault conditions of the health monitoring system 100 and the gas turbine engine 20 (step 204). The signatures may be predefined, for example. In the same or another example, the pre-filter utilizes the criteria to omit portions of the sensor data that are not relevant to the plurality of signatures.

At least one transfer function is utilized to extract features from the filtered sensor data based on the plurality of signatures (step 206), based on a physics understanding of the health monitoring system 100 and/or gas turbine engine 20.

A machine learning technique is utilized to analyze the extracted features, and determine whether any of the extracted features are indicative of a fault condition in the health monitoring system 100 or the gas turbine engine 20 (step 208). The analysis of step 208 is based on one or more signatures of known fault conditions (schematically shown as 122 in Figure 4) for the health monitoring system 100 or the gas turbine engine 20.

Based on the analysis of step 208 indicating the presence of a fault condition, a fault detection notification is provided (step 212). In one example, the fault detection notification of step 212 includes providing a visual or audible notification. In one example, the notification is provided to a fault annunciation software logic to record the fault for post engine run maintenance. The notification of step 212 may identify a single, discrete fault or a group of faults with similar signatures, for example.

The signatures of known fault conditions 122 may include signatures for one or more of the following, for example: a degraded health monitoring sensor 110 and a degraded communication link to the health monitoring sensor 110, as discussed above. Some examples of fault conditions of the gas turbine engine 20 could include ODM signal signatures for particles in the lubrication system, Foreign Object Debris (FOD) signals detected by the IDM, damaged blades detected by BHM, and elevated vibration at certain frequency related to a faulty part detected by the vibration monitoring system.

The pre-filter of step 204 is designed based on physics properties of the health monitoring system 100, the gas turbine engine 20, or both. In one example, the pre-filter utilizes pre-filter criteria which indicates data that may be omitted that is one of greater than or less than a signal threshold. The signal threshold may be predefined, for example. In one example, the pre-filter criteria could be a rule-based detection algorithm that is capable of capturing all the fault conditions of the gas turbine engine 20 that the health monitoring system 100 is designed to detect, but may fail to differentiate the fault events and noises (e.g., sensor noise from health monitoring sensor 100, communication interface, and/or interference noise, etc.). Nevertheless, the goal for pre-filtering is achieved. The pre-filter criteria is determined based on the fault conditions to be identified. When a signal threshold is used as the pre-filter criteria, it means that the engine is operating free of any fault when the threshold is not exceeded, but when the threshold is exceeded the fault condition is not yet further identified. However, if occasional exceedance of the threshold is acceptable as healthy operation of the engine, some rule-base criteria may be established to further refine the data for fault identification. On the other hand, a health monitoring system comes with a set of fault detection algorithms (e.g., ODM or IDM detection criteria) for detecting engine faults when they are designed, and such algorithms could be selectively employed in the pre-filter criteria so that the data of all fault conditions in the engine and the health monitoring system may be sorted out for further fault identification using the method 200.

The pre-filter omits sensor signals that are not of interest for fault identification (e.g., those representing healthy engine operation), so that cases of interest remain (e.g., failure/degradation of the health monitoring system 100 itself). Since faults are rare events in engine operation, and a majority of time the gas turbine engine 20 will be running fault-free, there is typically no need to concern FD&I with such data. Pre-filtering is performed based on a set of conditions. When those conditions are violated, the signal represents one of the fault conditions which are easier to detect (e.g., the fault that the health monitoring system 100 is designed to detect with a higher degree of confidence at a given signal to noise ratio). Pre-filtering will result in a set of data that is typically much reduced and balanced for FD&I. The pre-filtering criteria is derived utilizing the physics properties of the health monitoring system 100, and related to the existing physics-based rule-based fault detection.

Pre-filtering also helps avoid bias the sensor data for machine learning by avoiding a large volume of negative cases. Filtering out the negative cases will allow focus on the conditions that a maintenance action may be called for, but are difficult to detect with known rule-based systems.

The at least one transfer function of step 206 implements one or more conversions that take the sensor data corresponding to lower-level features to a set of features to be used for fault identification. In one example, the at least one transfer function of step 206 includes first-tier transfer functions and second-tier transfer functions, where the first-tier transfer functions are used to convert the filtered sensor data (from pre-filtering step 204) to a set of first-tier features, and the second-tier transfer functions are used to convert the set of first-tier features to a set of second-tier features for fault identification.

In one example of step 206, the first-tier features are measured over a first duration of time, and the second-tier features are measured over a second duration of time that is greater than the first duration of time. In one example, the first duration of time is the time of generation of a block of the sensor signal, and the second duration is the time of generation of multiple contiguous blocks of the sensor signal.

The feature extracted from the data as first-tier features may be a result of time/frequency domain analyses (e.g., statistical features or power spectrum form Fourier transform), or a technique that is more sophisticated such as wavelet, notch, or narrow passband filtering. As discussed above, the second-tier features may be used to represent a change in one of the first-tier features over time.

Feature extraction is carried out based on a physics understanding and engineering principles of the health monitoring system 100 and/or gas turbine engine 20. In one example, the first-tier feature may be a statistical measure (e.g., standard deviation), and the second-tier feature represents a change in the first, statistical feature over time. Such a two-tiered feature allows for effective capture of the signal pattern with a physics understanding. For instance, a particle event in a debris monitoring system may not occur continuously, and hence, a particle signature in the sensor signal may appear discretely but not continuously. Similarly, noises induced by a bad connection may be elevated in clusters but not all the time. Such a temporal pattern will be captured by the two-tier feature. This may also include time domain analysis and pattern recognition, for example. Frequency domain analysis may be used to confirm event detection when the event signal is contaminated by noise.

Once the physics-based features are extracted in step 206, machine learning can be employed for classification in step 208. Different to traditional machine learning approaches where the classification results are validated with a separate set of data, the machine learning result here may not be validated with additional date due to scarce fault cases. Instead, the classification results may need to be explainable so that there is not artificially overfitted cases. The process of explainable machine learning driven by physics-based features in some examples guarantees the validity of the final classification result, and hence, will not need additional data for validation. This process may potentially have 100% recall and precision, and as discussed above may be iterated multiple times between feature extraction (step 206) and machine learning classification (step 208).

Optionally, a validation step may be performed to validate a detected fault condition by determining whether the filtered sensor data corresponding to the fault condition is consistent with a corresponding one of the plurality of signatures corresponding to the fault condition. In one example, the providing a fault detection notification in step 212 is only performed if the validating indicates that the filtered sensor data corresponding to the fault condition is consistent with the corresponding one of the plurality of signatures corresponding to the fault condition.

The validation validates the machine learning classification result and is a process of checking the classification logic against the physics understanding of the fault conditions and ensuring coherence from feature extraction to classification result. For example, if a fault produces sensor signal primarily one-sided with a few exceptions, the features should reflect the one-side signals and the exceptions, and the classification logic should correctly process the features and indicate the fault.

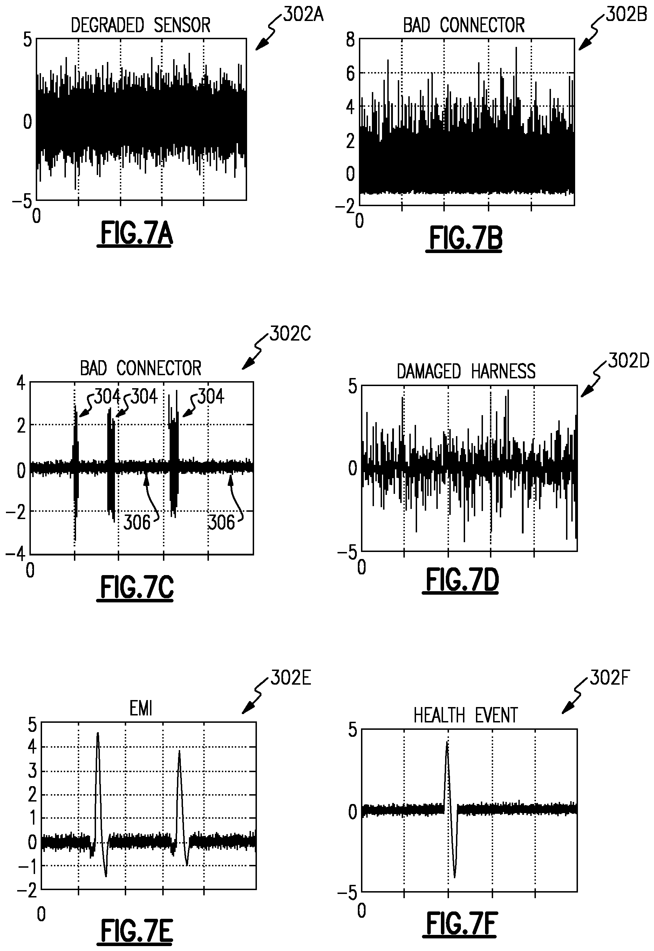

As will be discussed below in greater detail in relation to Figures 7A-F, visualization of sensor signals clearly shows distinct signatures of the signals for different fault events, and they are explainable. For example, the events to be detected by the health monitoring system 100 have the signal signature that the system is designed to have (e.g., a particle detected by an ODM). Events caused on degraded sensors are usually seen with elevated background noise that is proportional to the engine rotor speed. Events induced by bad connection would have clustered high noise in the sensor signal to reflect the physical condition of occasionally lost connection. Events resulted from damaged harness would have continuous disturbance to the sensor signal, etc. Guided by the physics, these signatures can be characterized with time & frequency domain analyses, or more sophistically, wavelet, notch, and/or narrow passband filtering.

In some instances, the characteristics of a specific feature can be leveraged to isolate the fault source. For example, high skewness and kurtosis may be related to connector noise, high kurtosis but less skewness may indicate harness damage, elevated FFT magnitude at certain frequency may indicate the part that rotates at that frequency, and a combined time/frequency domain analyses may isolate the fault to electromagnetic interference. In the example of noise source isolation, if a system is sensitive to vibrations or pressure ripple, the frequency of vibrations or pressure fluctuations may appear in the sensing signal. Appearance of these mechanically defined frequencies would imply the noise is mechanically induced, while noise at a non-mechanical frequency could point to electromagnetic interference.

In general, it is very difficult to achieve 100% recall and precision with a rule-based detection system because the system would be very susceptible to noise in the sensor signal. Also, the health monitoring system 100 could fail/degrade due to a variety of issues such as bad connection, damaged harness, and electromagnetic interference. The techniques discussed herein leverage the unique signatures associated with such fault conditions. The distinct features of those signatures are used for feature extraction and fault identification. These features may form a hyperdimensional space that cannot be adequately represented with a rule-based system alone, but can be effectively resolved with machine learning.

The machine learning technique performed in step 208 in one example involves inputting the samples of the sensor signal 114 (e.g., after being processed by the SCU 111) into the neural network 120 to identify whether those samples are indicative of fault conditions.

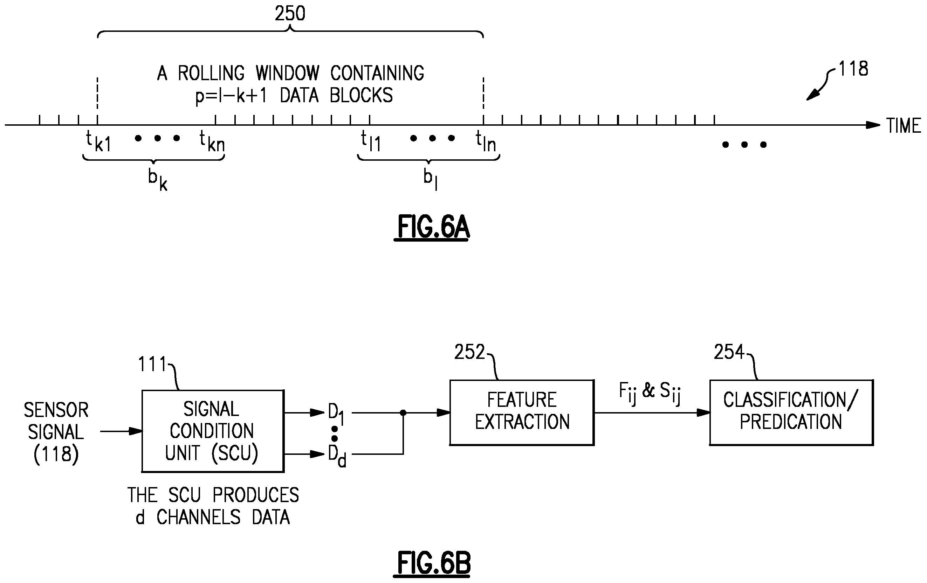

An example application of the method 200 with two-tiered features will now be discussed below in connection with Figures 6A-6B.

Figure 6A schematically illustrates an example debris monitor sensor signal 118 that is provided in a rolling window 250 that contains $p = l - k + 1$ data blocks $b$. Blocks $b_k$ through $b_l$ are shown in the example window of Figure 6A. Each block may have a fixed number of samples, for example.

Figure 6B schematically illustrates an example implementation of the method 200 using the signal of Figure 6A. Referring now to Figure 6B, the sensor signal 118 is provided to SCU 111 which conditions the sensor signal and which may produce multiple channels of data per sensor for example (e.g., $d$ channels of data, shown as $D_1 - D_d$ in Figure 6B). The sensor signal 118 may be acquired in real-time continuously at a sampling rate, and then processed in blocks with each block having a fixed number of samples (e.g., as shown in Figure 6A).

Features are extracted (schematically shown as 252), which corresponds to step 206 of Figure 5. This may be performed with data from each channel and block, for example. Assuming there are $d$ channels of data, $n$ samples in a block, and $m$ features derived, then the $i$-th first-tier feature derived from the $k$-th block of data in the $j$-th channel can be expressed as shown below in equation (1):

$$F_{ij}(b_k) = g_i\left(D_j(t_{k1}), \ldots, D_j(t_{kn})\right) \quad where \; i \in 1, \ldots m, \; j \in 1, \ldots d$$

Equation (1)

where $F_{ij}(b_k)$ is the $i$-th first-tier feature derived from data block $k$ in channel $j$;

*b* is a block of data;
*g* is a transfer function for converting data to a feature (e.g., a standard deviation); and
*D* represents the sensor data;

To capture the changing pattern of a given feature, a second-tier feature can be derived from the corresponding first-tier feature in a rolling window of data blocks 250. Suppose this window has *p* data blocks. Then a second-tier feature for $F_{ij}$ can be expressed as shown below in equation (2):

$$S_{ij} = w_i\big(F_{ij}(b_k), \dots, F_{ij}(b_l)\big) \qquad \text{Equation (2)}$$

where S is a second-tier feature derived from the first-tier feature *F*.

Classification / prediction can then be performed as shown in block 254 (e.g., and described in step 208 of Figure 5).

In one example, each sample is one measurement from the sensor. Although individual samples and their meaning in physics may have little significance for machine learning, a pattern of the samples does.

The fault detection described herein can be used in the health monitoring system 100 to avoid a false positive detection. For example, if a comparison of the sensor signal to debris detection criteria suggests the presence of debris, but the method 200 detects a fault in the health monitoring system 100, in one example this causes the computing device 101 to characterize the apparent debris detection as a false positive detection.

Figures 7A-F are graphs illustrating signatures of various fault conditions for an ODM system. Similar fault detection signatures could be utilized for other health monitoring systems using high-rate sensors as well.

Fig. 7A illustrates a graph 302A depicting an example signature for a degraded debris sensor 110, which exhibits significant background noise.

Fig. 7B illustrates a graph 302B depicting an example signature for a degraded connector 112, which also has significant background noise, almost all of which occurs above -1 on the y-axis.

Fig. 7C illustrates a graph 302C depicting another example signature for a degraded connector 112, which includes on noise 304 and off noise 306.

Fig. 7D illustrates a graph 302D depicting an example signature for damaged wiring 114, which includes consistently elevated noises having lobes with both positive and negative polarity, but failing the debris detection criteria.

Fig. 7E illustrates a graph 302E depicting an example signature for an external interference (e.g., an electromagnetic (EMI) disturbance), which tends to include largely one side pulses (i.e., pulses that are primarily only positive or negative on the y-axis).

Fig. 7F illustrates a graph 302F depicting an example signature for an event signal, which meets criteria for a health event fault condition of the gas turbine engine 20 (i.e., and not the health monitoring system 100).

As discussed above, the occurrence of fault conditions in health monitoring systems is a relatively rare occurrence, and a data set with rare occurrences can prevent challenges in a machine learning context, as a data set can be very unbalanced between healthy operation (majority of cases) and faulty operation (minority of cases). The method 200 proposes a framework and a procedure that incorporate the physics understand of the problem of relative rare fault conditions, and engineering principles in system design with machine learning so that the resulted FD&I are physically sound rather than statistically reasoned. Because the machine learning results are explainable in terms of physics, the predication of rare positive cases can still be validated by physics reasoning.

Although example embodiments have been disclosed, a worker of ordinary skill in this art would recognize that certain modifications would come within the scope of this disclosure. For that reason, the following claims should be studied to determine the scope and content of this disclosure.

**Claims**

1. A method for fault identification for a gas turbine engine (20), comprising:

   receiving sensor data from at least one health monitoring sensor (110) of a health monitoring system (100) for a gas turbine engine (20), each of the at least one sensors having a sampling rate of at least one kilohertz;
   utilizing a pre-filter to filter the sensor data and obtain filtered data based on a plurality of signatures of fault conditions of the health monitoring system (100) and the gas turbine engine (20);
   utilizing at least one transfer function to extract features from the filtered sensor data based on the plurality of signatures;
   utilizing a machine learning technique to analyze the extracted features, and determine whether any of the extracted features are indicative of a fault condition in the health monitoring system (100) or the gas turbine engine (20); and

based on the analysis indicating the presence of a fault condition, providing a fault detection notification.

2. The method of claim 1, wherein:

the pre-filter is designed based on the physics properties of the health monitoring system (100), the gas turbine engine (20), or both;

pre-filter criteria indicates data that may be omitted that is one of greater than or less than a signal threshold; and

said utilizing the pre-filter comprises omitting sensor data that is said one of greater than or less than the signal threshold.

3. The method of claim 1 or 2, wherein said utilizing the pre-filter comprises omitting sensor data that corresponds to healthy engine operation.

4. The method of any preceding claim, wherein the at least one transfer function includes first-tier transfer functions and second-tier transfer functions, the method comprising:

utilizing one or more of the first-tier transfer functions to convert the filtered sensor data to a set of first-tier features; and

utilizing one or more of the second-tier transfer functions to convert the set of first-tier features to a set of second-tier features for fault identification.

5. The method of claim 4, wherein the first-tier features are measured over a first duration of time, and the second-tier features are measured over a second duration of time that is greater than the first duration of time.

6. The method of claim 4 or 5, wherein the first-tier transfer functions utilize a time domain analysis, a frequency domain analysis, wavelet filtering, notch filtering, or passband filtering to provide the set of first-tier features, and each second-tier feature represents a change in one of the first-tier features over time.

7. The method of any preceding claim, comprising, based on the analysis indicating the presence of a fault condition:

validating the fault condition by determining whether the filtered sensor data corresponding to the fault condition is consistent with a corresponding one of the plurality of signatures corresponding to the fault condition;

wherein said providing a fault detection notification is only performed if the validating indicates that the filtered sensor data corresponding to the fault condition is consistent with the corresponding one of the plurality of signatures corresponding to the fault condition.

8. The method of any preceding claim, wherein the one or more signatures of fault conditions include:

one or more signatures for a degraded health monitoring sensor (110);

one or more signatures for a degraded communication link (112, 114, 116); and/or

one or more signatures for external interference to signals from the at least one sensor (110).

9. The method of any preceding claim, wherein the health monitoring system (100) is one of:

an inlet debris monitoring system (70);

an oil debris monitoring system (62);

a blade health monitoring system for fan, compressor, or turbine blades (42, 44, 46); or

a vibration monitoring system configured to monitor vibration of the gas turbine engine (20), in which case the at least one health monitoring sensor (110) includes an accelerometer.

10. A health monitoring system (100) for a gas turbine engine (20), comprising:

at least one health monitoring sensor (110) configured to provide sensor data indicative of a health of a gas turbine engine (20), wherein each of the at least one sensors has a sampling rate of at least one kilohertz; and

processing circuitry (102) configured to:

receive the sensor data from the at least one health monitoring sensor (110);

utilize a pre-filter to filter the sensor data and obtain filtered data that omits portions of the sensor data based on a plurality of signatures of fault conditions of the health monitoring system (100) and the gas turbine engine (20);

utilize at least one transfer function to extract features from the filtered sensor data based on the plurality of signatures;

utilize a machine learning technique to analyze the extracted features, and determine whether any of the extracted features are indicative of a fault condition in the health monitoring system (100) or the gas turbine engine (20); and

based on the analysis indicating the presence of a fault condition, provide a fault detection identification.

**11.** The health monitoring system (100) of claim 10, wherein:

the pre-filter is designed based on the physics properties of the health monitoring system (100), the gas turbine engine (20), or both, pre-filter criteria indicates data that may be omitted that is one of greater than or less than a signal threshold, and to utilize the pre-filter, the processing circuitry (102) is configured to omit sensor data that is said one of greater than or less than the signal threshold; and/or

to utilize the pre-filter, the processing circuitry (102) is configured to omit sensor data that corresponds to healthy engine operation.

**12.** The health monitoring system (100) of claim 10 or 11, wherein the at least one transfer function includes first-tier transfer functions and a second-tier transfer functions, and the processing circuitry (102) is configured to:

utilize one or more of the first-tier transfer functions to convert the filtered sensor data to a set of first-tier features; and

utilize one or more of the second-tier transfer function to convert the set of first-tier features to a set of second-tier features for fault identification, optionally wherein:

the first-tier features are measured over a first duration of time, and the second-tier features are measured over a second duration of time that is greater than the first duration of time; and/or

the first-tier transfer functions utilize a time domain analysis, a frequency domain analysis, wavelet filtering, notch filtering, or passband filtering to provide the set of first-tier features, and each second-tier feature represents a change in one of the first-tier features over time.

**13.** The health monitoring system (100) of any of claims 10 to 12, wherein the processing circuitry (102) is configured to, based on the analysis indicating the presence of a fault condition:

validate the fault condition by determining whether the filtered sensor data corresponding to the fault condition is consistent with a corresponding one of the plurality of signatures corresponding to the fault condition; and

only provide the fault detection notification based on the validation indicating that the filtered sensor data corresponding to the fault condition is consistent with the corresponding one of the plurality of signatures corresponding to the fault condition.

**14.** The health monitoring system (100) of any of claims 10 to 13, wherein the one or more signatures of known fault conditions include at least one of:

signatures for a degraded health monitoring sensor (110);

signatures for a degraded communication link (112, 114, 116) to one of the health monitoring sensors (110); or

signatures for external interference to the signals from one of the health monitoring sensors (110).

**15.** The health monitoring system (100) of any of claims 10 to 14, wherein the health monitoring system (100) includes:

an inlet debris monitoring system (70) configured to monitor for debris entering an inlet of the gas turbine engine (20);

an oil debris monitoring system (62) configured to monitor for debris in a lubrication system of the gas turbine engine (20);

a blade health monitoring system for fan, compressor, or turbine blades (42. 44, 46); or

a vibration monitoring system configured to monitor vibration of the gas turbine engine (20), in which case the at least one health monitoring sensor (110) includes at least one accelerometer.

FIG.1

**FIG.2**

EP 4 270 131 A1

FIG.3

<u>FIG.4</u>

FIG.5

EP 4 270 131 A1

250

A ROLLING WINDOW CONTAINING
p=l−k+1 DATA BLOCKS

$t_{k1}$ • • • $t_{kn}$        $t_{l1}$ • • • $t_{ln}$        • • •

TIME

118

$b_k$        $b_l$

## FIG.6A

SENSOR
SIGNAL
(118)

111
SIGNAL
CONDITION
UNIT (SCU)

$D_1$
:
$D_d$

252
FEATURE
EXTRACTION

$F_{ij}$ & $S_{ij}$

254
CLASSIFICATION/
PREDICATION

THE SCU PRODUCES
d CHANNELS DATA

## FIG.6B

**FIG.7A** — DEGRADED SENSOR (302A)

**FIG.7B** — BAD CONNECTOR (302B)

**FIG.7C** — BAD CONNECTOR (302C)

**FIG.7D** — DAMAGED HARNESS (302D)

**FIG.7E** — EMI (302E)

**FIG.7F** — HEALTH EVENT (302F)

Europäisches
Patentamt

European
Patent Office

Office européen
des brevets

# EUROPEAN SEARCH REPORT

Application Number

EP 23 17 1157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ATAMURADOV VEPA ET AL: "Machine Health Indicator Construction Framework for Failure Diagnostics and Prognostics", JOURNAL OF SIGNAL PROCESSING SYSTEMS, SPRINGER, US, vol. 92, no. 6, 3 January 2020 (2020-01-03), pages 591-609, XP037117016, ISSN: 1939-8018, DOI: 10.1007/S11265-019-01491-4 [retrieved on 2020-01-03] * page 591 - page 608 * | 1-15 | INV. G05B23/02 |
| A | EP 2 535 694 A1 (HAMILTON SUNDSTRAND CORP [US]) 19 December 2012 (2012-12-19) * paragraph [0001] - paragraph [0020] * | 1,11 | |
| A | EP 3 239 684 A1 (SIEMENS AG [DE]) 1 November 2017 (2017-11-01) * paragraph [0001] - paragraph [0009] * | 7,8,13, 14 | |

TECHNICAL FIELDS
SEARCHED      (IPC)

G05B

The present search report has been drawn up for all claims

| Place of search | Date of completion of the search | Examiner |
|---|---|---|
| Munich | 25 August 2023 | Kuntz, Jean-Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 17 1157

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2023

| Patent document cited in search report | | Publication date | Patent family member(s) | | Publication date |
|---|---|---|---|---|---|
| EP 2535694 | A1 | 19-12-2012 | EP | 2535694 A1 | 19-12-2012 |
| | | | US | 2012323531 A1 | 20-12-2012 |
| EP 3239684 | A1 | 01-11-2017 | CA | 3019273 A1 | 02-11-2017 |
| | | | CN | 109073508 A | 21-12-2018 |
| | | | EP | 3239684 A1 | 01-11-2017 |
| | | | EP | 3449232 A1 | 06-03-2019 |
| | | | JP | 6636178 B2 | 29-01-2020 |
| | | | JP | 2019515278 A | 06-06-2019 |
| | | | KR | 20190002612 A | 08-01-2019 |
| | | | RU | 2694105 C1 | 09-07-2019 |
| | | | US | 2019120720 A1 | 25-04-2019 |
| | | | WO | 2017186597 A1 | 02-11-2017 |

EPO FORM P0459

For more details about this annex : see Official Journal of the European Patent Office, No. 12/82